Europäisches Patentamt

European Patent Office

Office européen des brevets

(19)

(11) Veröffentlichungsnummer: **0 117 377**
**B1**

(12) **EUROPÄISCHE PATENTSCHRIFT**

(45) Veröffentlichungstag der Patentschrift:
08.06.88

(21) Anmeldenummer: 83810086.5

(22) Anmeldetag: 01.03.83

(51) Int. Cl.⁴: **A 01 F 15/00**

(54) Vorrichtung zum Bilden eines gepressten Halmgutballens.

(43) Veröffentlichungstag der Anmeldung:
05.09.84 Patentblatt 84/36

(45) Bekanntmachung des Hinweises auf die Patenterteilung:
08.06.88 Patentblatt 88/23

(84) Benannte Vertragsstaaten:
AT BE CH DE FR GB IT LI NL SE

(56) Entgegenhaltungen:
WO-A-83/00002
DE-A-2 653 318
DE-A-2 739 935
FR-A-2 175 382
US-A-3 534 537
US-A-4 302 923

(73) Patentinhaber: **Multinorm B.V., Hoofdweg 1278**
**P.O. Box 1, NL- 2150 AA Nieuw- Vennep (NL)**

(72) Erfinder: **Der Erfinder hat auf seine Nennung**
**verzichtet**

(74) Vertreter: **de Vries, Johannes Hendrik Fokke,**
**Octrooibureau Los en Stigter B.V. P.O. Box**
**20052, NL- 1000 HB Amsterdam (NL)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung bezieht sich auf eine Vorrichtung zum Bilden eines gepressten Halmgutballens, gemäss dem Oberbegriff des Anspruches 1.

Eine derartige Vorrichtung wird gewöhnlich hinter einem Schlepper gekuppelt, wobei der Aufsammler das Halmgut vom Land aufnimmt und das aufgenommene Halmgut im Presskäfig straff zu einem Halmgutartigesballen aufgerollt wird. DE-A-2 739 935 betrifft eine Vorrichtung, der Presskäfig einen ungefähr zylindrischen Querschnitt hat, in dem ein ungefähr zylindrischer Wickelballen gebildet wird. In der Praxis haben derartige zylindrische Ballen jedoch Nachteile. Sie sind schwer zu handhaben und zur Lagerung schwer aufzustapeln. Weiterhin werden beim Stapeln immer Zwischenräume zwischen den zylindrischen Ballen bestehen, sodass ein Stapel von Ballen unnötig viel Raum einnimmt, was bei Transport der Ballen sehr nachteilig ist.

US-A-4 302 923 betrifft eine Vorrichtung der obengenannten Art mit einem oszillierend hin und her bewegbaren Presskäfig, so dass ein zickzackgefalteter Halmgutballen mit ebenen Seiten gebildet wird. Der Zusammenhang eines derartigen gebildeten Ballens ist jedoch weniger gut als bei einem Wickelballen.

Die Erfindung bezweckt eine Vorrichtung der obengenannten Art, bei welcher die genannten Nachteile in einfacher, jedoch zweckmässiger Weise beseitigt sind.

Zu diesem Zweck ist die Vorrichtung nach der Erfindung durch die Merkmale des Anspruches 1 gekennzeichnet.

Dadurch, dass der Führungsrahmen um Umfang mit einer konstanten Geschwindigkeit antreibbar ist, wird im Folge des varierenden Abstandes zwischen dem Antreibspunkt und der Längsachse, der Führungsrahmen und damit der Presskäfig mit varierenden Geschwindigkeit rotieren, wobei die Rotationsgeschwindigkeit des Presskäfigs am kleinsten ist, wann die Ecken des Führungsrahmen den Antreibspunkt passieren. In dieser Weise wird erreicht, dass starke, zusammenhangende Halmgutballen mit ebenen Seiten erhalten werden, sodass die Ballen besser zu handhaben sind und das Aufstapeln ziemlich einfach ist. Ausserdem werden inbesondere bei Ballen mit einem quadratischen oder rechteckigen Querschnitt im Stapel von Ballen keine Zwischenraume mehr vorhanden sein.

Die Erfindung ward nachstehend an Hand der Zeichnung erläutert, in der zwei Ausführungsbeispiele der Vorrichtung nach der Erfindung dargestellt sind.

Fig. 1 ist eine schematisch dargestellte Seitenansicht einer ersten Ausführungsform der Vorrichtung nach der Erfindung.

Fig. 2 ist ein Schnitt nach der Linie II-II in Fig. 1.

Fig. 3 ist eine schematisch dargestellte Seitenansicht einer zweiten Ausführungsform der Vorrichtung nach der Erfindung.

Fig. 4 zeigt im Schnitt das Detail IV in Fig. 3, wobei die Betätigungsrolle sich in der Arbeitsstellung befindet.

Fig. 5 ist ein mit Fig. 4 übereinstimmender Schnitt, wobei die Betätigungsrolle sich in der Ruhestellung befindet.

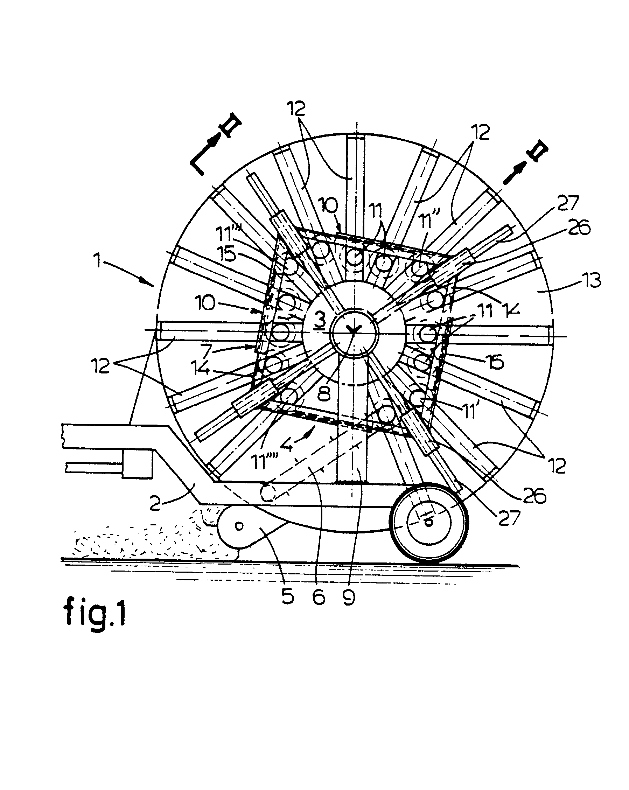

In Fig. 1 ist schematisch eine Seitenansicht einer Vorrichtung 1 zum Bilden eines gepressten Halmgutballens dargestellt. Die Vorrichtung 1 ist versehen mit einem auf einem Fahrgestell unterstützten Presskäfig 3, der eine Einführungsöffnung 4 für das Halmgut aufweist. Das Fahrgestell 2 trägt weiterhin einen Aufsammler 5. Im Betrieb ist die Vorrichtung 1 hinter einem nicht dargestellten Schlepper gekuppelt, wobei der Aufsammler 5 das Halmgut vom Land aufnimmt, woraufhin das aufgenommene Halmgut durch einen Förderer 6 der Einführungsöffnung 4 zugeführt wird.

Der Presskäfig 3 der in Fig. 1 abgebildeten Vorrichtung hat einen quadratischen Querschnitt, der durch einen Führungsrahmen 7 bestimmt wird, der drehbar um die zentrale, quer zur Fahrtrichtung der Vorrichtung 1 verlaufende Längsachse 8 des Presskäfigs 3 durch eine Stütze 9 unterstützt ist. Die Umfangswände 10 des Presskäfigs 3 werden durch in Abstand von einander liegende, drehbare Rollen 11 bestimmt, die mit einem Ende schiebbar in Schlitzen 12 geführt sind, die in einer ungefähr vertikal Verlaufenden Führungsplatte 13 gebildet sind und relativ zur zentralen Längsachse radial verlaufen.

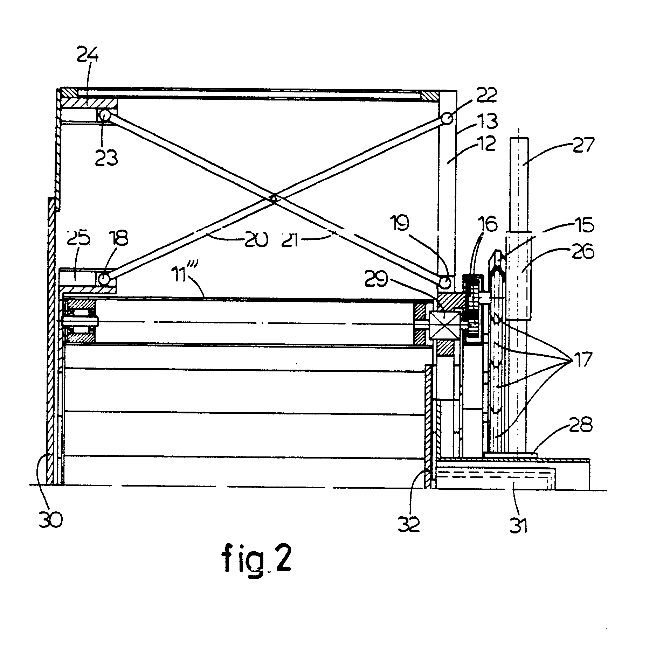

Die Seiten des Führungsramens 7 bestehen je aus zwei ineinander schiebbaren länglichen rinnenförmigen Profilen 14, 15, deren offene Seite zur zentralen Längsachse 8 gerichtet ist. Wie aus Fig. 2 ersichtlich ist, wirkt der Führungsrahmen 7 mit den in den Schlitzen 12 geführten Enden der Rollen 11 zussammen, indem jede Rolle über zwei Umkehrzahnräder 16 mit einem Rad 17 gekuppelt ist, das in das rinnenförmige Profil 14 oder 15 des Führungsrahmens 7 angreift. In dieser Weise bestimmt der Führungsrahmen 7 die radiale Stellung der Rollen 11 relativ zur zentralen Längsachse 8 des Presskäfigs 3. Die Enden jeder Rolle 11 sind dabei gelenkig verbunden mit den Enden 18, 19 der kreuzweise laufenden Tragstangen 20, 21. Das andere Ende 22 der Tragstange 20 ist gelenkig montiert im zugehörigen Schlitz 12 in der Führungsplatte 13, während das andere Ende 23 der Tragstange 21 gelenkig in einer Stütze 24 montiert ist, die radial über dem von der Führungsplatte 13 abgekehrten Ende der zugehörigen Rolle 11 angeordnet ist. Dieses Ende 23 ist gleichfalls schiebbar in dieser Stütze 24 geführt. Das Ende 18 der Tragstange 20 ist schiebbar in einem Träger 25 geführt, der mit dem zugehörigen Ende der Rolle 11 verbunden ist.

Die in den Ecken des Presskäfigs 3 an einander angrenzenden rinnenförmigen Profile 14, 15 sind befestigt an Führungsbüchsen 26, die schiebbar auf radial verlaufenden Stäben 27 montiert sind. Die einwärts gerichteten Enden der Stäbe 27 sind montiert auf einer Hülse 28, die drehbar durch die Stütze 9 unterstützt wird. Die Führungsbüchsen werden beim Füllen der Presskäfigs mit dem aufgenommenen Halmgut aus einer Anfangsstellung, in welcher der Presskäfig seinen kleinsten Querschnitt hat, nach aussen in eine Endstellung gedrückt, in welcher der gebildet Halmgutballen die erwünschten Abmessungen aufweist.

Wenn der Führungsrahmen 7 für Rotation um die zentrale Längsachse 8 angetrieben wird, werden die Rollen 11 durch die Zusammenwirkung zwischen den Rädern 17 und den Profilen 14, 15 rotieren und jeweils eine andere radiale Stellung einnehmen, derart, dass eine Rotation des Presskäfigs 3 um seine Längsachse 8 erreicht wird, wobei durch das Rotieren der Rollen 11 der sich bildende Halmgutballen mitrotieren wird. Nach der Erfindung wird der Führungsrahmen 7 dabei derart angetrieben, dass die Halmgutzufuhr pro Zeiteinheit in den Ecken des Presskäfigs 3 grösser ist als im mittleren Teil der Seitenwände 10 des Presskäfigs 3. In dieser Weise kann ein Halmgutballen mit einem ungefähr quadratischen Querschnitt gebildet werden. Dabei wird angenommen, das der Aufsammler 5 pro Zeiteinheit eine ungefähr gleiche Halmgutmenge aufnimmt; eine Voraussetzung, die im allgemeinen global erfüllt wird. Die in dieser Weise gebildeten Halmgutballen mit quadratischem Querschnitt haben im Bezug auf die zylindrischen Halmgutballen, die gewöhnlich mit Vorrichtungen dieses Typs gebildet werden, den Vorteil, dass sie leichter zu handhaben sind und einfächer aufgestapelt werden können. Weiterhin wird es kaum einigen Zwischenraum zwischen den Halmgutballen geben, während bei Abdeckung ebensowenig Zwischenräume offen bleiben werden. Dadurch ist das gelagerte Halmgut der Aussenluft kann zugänglich, wodurch das Halmgut besser haltbar ist und die Qualität längere Zeit erhalten bleibt.

Bei der in den Fig. 1 und 2 dargestellten Vorrichtung 1 findet der Antrieb des Führungsrahmens 7 statt über eine oder mehrere in derselben relativen Stellung in Bezug auf die Einführungsöffnung 4 liegenden Rollen 11, zum Beispiel die Rollen 11', 11'', 11''', 11''''. Wie aus Fig. 2 ersichtlich ist, wird die Rolle 11''' mit konstanter Geschwindigkeit angetrieben durch einen Motor 29, der über die Umkehrzahnräder 16 gleichfalls das zugehörige Rad 17 und damit den Führungsrahmen 7 antreibt. Dadurch, dass der Führungsrahmen 7 am Umfang mit einer konstanten Geschwindigkeit angetrieben wird, wird im Folge des varierenden Abstandes zwischen dem antreibenden Rad 17 und der zentralen Längsachse 8 der Führungsrahmen 7 und damit der Presskäfig 3 mit varierender Geschwindigkeit rotieren. Da gerade im Moment des Füllens der Ecken des Presskäfigs 3 der Abstand der Räder 17, die zu den Rollen 11'-11'''' gehören, zur zentralen Längsachse 8 am grössten ist, wird die Rotationsgeschwindigkeit des Presskäfigs 3 dann am kleinsten sein. Bei der Zufuhr des Halmgutes an den mittleren Teilen der Seitenwände 10 des Presskäfigs 3 ist die Rotationsgeschwindigkeit am grössten, da in diesem Moment der Abstand der antreibenden Räder 17 zur Längsachse 8 am kleinsten ist.

Der Pressdruck auf dem sich bildenden Halmgutballen im Presskäfig 3 wird ausgeübt durch ein in der Zeichnung nicht dargestelltes Druckorgan, das zum Beispiel an wenigstens eine der Führungsbüchsen 26 angreift und auf diese eine radial zur Mitte gerichtete Kraft ausübt. Es ist zum Beispiel möglich, zwischen den Enden der Stäbe 27 und den Führungsbüchsen 26 eine Feder anzuordnen.

Wenn der sich bildende Gewächsballen die erwünschte Grösse erreicht hat, wird der Antrieb des Führungsrahmens 7 gestopt und kann eine Klappe 30 offengeschwenkt werden. Daraufhin kann der gebildete Halmgutballen mittels eines schematisch angedeuteten Telescopzylinders 31 und einer durch diesen Zylinder 31 betätigten Ausdruckplatte 32 aus dem Presskäfig 3 entfernt werden. Nach dem Zurückziehen der Ausdruckplatte 32 und dem Schliessen der Klappe 30 kann ein weiterer Halmgutballen gebildet, werden.

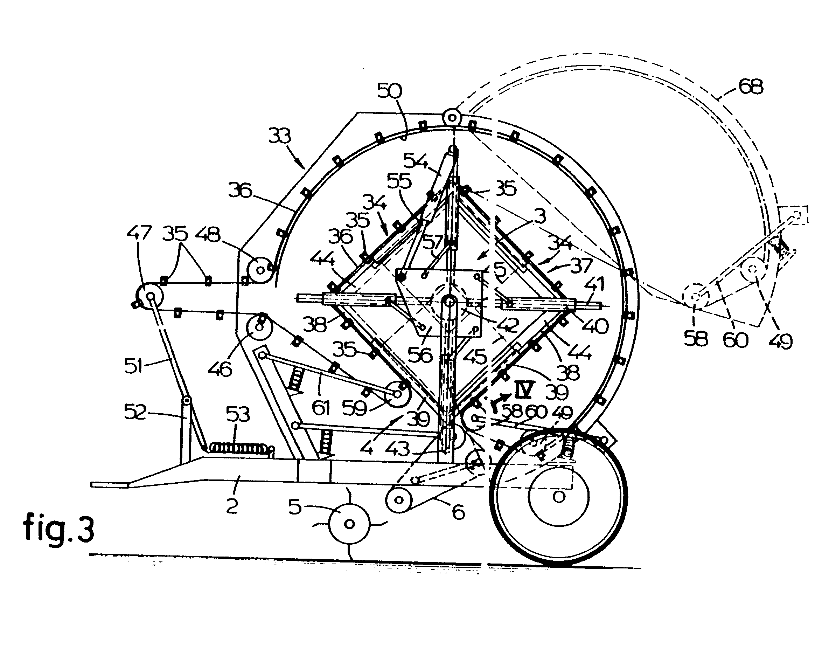

In Fig. 3 ist eine Vorrichtung 33 zum Bilden von gepressten Halmgutballen dargestellt, deren Wirkung übereinstimmt mit derjenigen der Vorrichtung 1 in Fig. 1. Die Vorrichtung 33 ist gleichfalls versehen mit einem Presskäfig 3, der auf einem Fahrgestell 2 unterstützt ist. Der durch das Fahrgestell 2 getragene Aufsammler 5 nimmt das Halmgut vom Land auf, woraufhin das aufgenommene Halmgut durch den Förderer 6 der Einführungsöffnung 4 des Presskäfigs 3 zugeführt wird.

Bei der Vorrichtung 33 werden die Umfangswände 34 des Presskäfigs 3 durch in Abstand voneinander liegende Stäbe 35 bestimmt, deren Enden mit zwei antreibbaren endlosen Ketten verbunden sind, von welchen in Fig. 3 nur eine ersichtlich ist. Die Ketten 36 sind über ihre ganze Länge mit dergleichen sich zwischen den Ketten 36 erstreckenden Stäben 35 versehen, die mit gegenseitig gleichen Zwischenabständen angeordnet sind.

Die Endwände des Presskäfigs werden je durch einen Führungsrahmen 37 bestimmt, der aus zwei ineinander schiebbaren länglichen Elementen 38, 39 besteht. Die in den Ecken des Presskäfigs 3 aneinander angrenzenden Elemente 38, 39 sind an Führungsbüchsen 40 befestigt, die zwischen einer Anfangs- und einer Endstellung schiebbar auf radial verlaufenden Stäben 41 montiert sind. Die Stäbe 41 sind mit einem Träger 42 verbunden, der durch eine auf dem Fahrgestell montierte Stütze 43 drehbar unterstützt ist. Jeder Führungsrahmen 37 ist mit vier in den Ecken am Führungsrahmen 37 befestigten Abschlussplatten 44, 45 versehen. Die Abschlussplatten 44, 45 können aneinander entlang schieben und schliessen in jeder Stellung der Führungsbüchsen 40 den Presskäfig 3 in axialer Richtung ab.

Wie aus Fig. 3 ersichtlich ist, sind die Ketten 36 mit den Stäben 35 über einen grossen Teil des Umfangs des Presskäfigs 3 auf den Führungsrahmen 37 geführt, während die Ketten 36 weiterhin einer Rückbahn entlang ausserhalb des Presskäfigs 3 geführt sind. In die Rückbahn der Ketten 26 sind Rollen 46, 47, 48 und 49 aufgenommen, während zwischen den Rollen 48 und 49 eine feste Führung 50 für die Ketten 36 vorhanden ist. Die Rollen 47 für die Ketten 36 sind am Ende eines Hebels 51 montiert, der durch eine Stütze 52 drehbar unterstützt ist, und dessen anderes Ende durch eine Feder 53 mit dem Fahrgestell 2 verbunden ist. Dadurch sind die Rollen 47 als Kettenspanner für die Ketten 36 tätig, wobei gleichfalls ein Druck auf dem sich im Presskäfig 3 bildenden Halmgutballen ausgeübt wird.

Der Pressdruck, der auf dem sich im Presskäfig 3 bildenden Halmgutballen ausgeübt wird, kann weiterhin mittels eines Hydraulikzylinders 54 bestimmt werden, der mit den Führungsbüchsen 40 gekuppelt ist. Die Kolbenstange 55 des Zylinders 54 ist dazu drehbar mit einer Kuppelplatte 56 verbunden, die durch Stangen 57 gleichfalls mit den Führungsbüchsen 40 verbunden ist. Die Stangen 57 sind mit ihren Enden drehbar an den Führungsbüchsen 40 bzw. der Kuppelplatte 56 montiert. Das von der Kolbenstange 55 abgekehrte Ende des Zylinders 54 ist mit dem auswärts gerichteten Ende eines der Stäbe 41 verbunden.

Die Ketten 36 mit den Stäben 35 werden in einem ersten Umfangspunkt der Führungsrahmen 37 mit diesen Führungsrahmen gekuppelt mittels Auflagerollen 58, während diese in einem zweiten Umfangspunkt der Führungsrahmen 37 durch Abnahmerollen 59 losgekuppelt werden. In Fig. 3 ist nur eine Auflagerolle 58 und eine Abnahmerolle 59 ersichtlich. Zwischen den Auflagerollen 58 und den Abnahmerollen 59 liegt die Einführungsöffnung 4. Die Auflagerollen 58 und die Abnahmerollen 59 sind durch Tragarme 60 bzw. 61 federnd unterstützt.

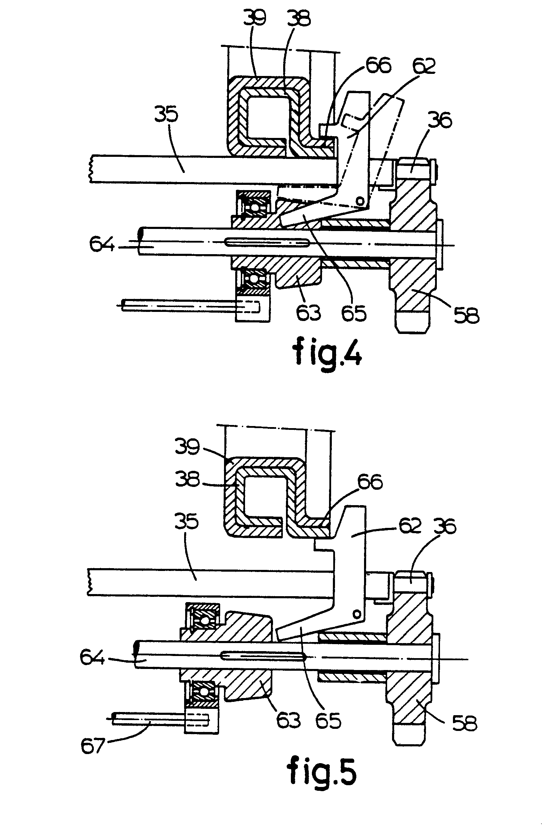

Jeder Stab 35 ist für die Kupplung mit dem Führungsrahmen 37 auf beiden Seiten mit einem drehbar montierten Haken 62 versehen, wie in den Fig. 4 und 5 ersichtlich ist. Die Haken 62 werden betätigt durch Betätigungsrollen 63, die auf den Wellen der Auflagerollen 58 bzw. der Abnahmerollen 59 angeordnet sind. In den Fig. 4 und 5 ist eine der auf der Welle 64 der Auflagerollen 58 montierten Betätigungsrollen 63 ersichtlich. Beim Passieren der Auflagerollen 58 werden die Haken 62 in eine in Fig. 4 mit einer unterbrochenen Linie angedeutete Freigabestellung geschwenkt, indem ein Vorsprung 65 der Haken 62 durch die Betätigungsrollen 63 angehoben wird. Nach dem Passieren der Rollen 58 fallen die Haken 62 wieder in die Arbeitsstellung zurück, in welcher die Haken 62 an einen vorragenden Flanschrand 66 der Führungsrahmen 37 angreifen. Dadurch knne die Stäbe 35 durch den sich im Presskäfig 3 bildenden Halmgutballen nicht von den Führungsrahmen 37 weggedrückt werden. Beim Passieren der Abnahmerollen 59 werden die Haken 62 durch entsprechende Betätigungsrollen 63 wieder in die Freigabestellung gebracht, sodass die Stäbe 35 von den Führungsrahmen 37 abgenommen werden können.

Die Ketten 36 werden zum Beispiel durch eine der Rollen 46-49 mit einer konstanten Geschwindigkeit angetrieben, sodass auch die Führungsrahmeen 37 am Umfang mit einer konstanten Geschwindigkeit angetrieben werden. Da der Abstand der Auflagerollen 58 zur zentralen Längsachse 8 des Presskäfigs 3 beim Drehen der Führungsrahmen 37 variert, wird auch die Rotationsgeschwindigkeit der Führungsrahmen 37 und damit des Presskäfigs 3 und des sich in diesem bildenden Halmgutballens variieren. Dadurch, dass die Auflagerollen 58 in der Nähe der Einführungsöffnung 4 des Presskäfigs 3 liegen, wird, wenn die Ecken des Presskäfigs 3 die Einführungsöffnung 4 passieren, die Rotationsgeschwindigkeit des Presskäfigs am kleinsten sein, da der Abstand der Auflagerollen 58 zur zentralen Längsachse 8 in diesem Moment am grössten ist. Wenn die mittleren Teile der Seitenwände 34 des Presskäfigs 3 die Einführungsöffnung 4 passieren, wird die Rotationsgeschwindigkeit am grössten sein. Dadurch wird in einfacher Weise erreicht, dass die Halmgutzufuhr pro Zeiteinheit in den Ecken des Presskäfigs 3 grösser ist als im mittleren Teil der Umfangswände 34 des Presskäfigs 3.

Damit der gebildete Halmgutballen aus dem Presskäfig 3 entfernt werden kann, sind die Betätigungsrollen 63 zwischen einer in Fig. 4 abgebildeten Arbeitsstellung und einer in Fig. 5 abgebildeten Ruhestellung auf der Welle 64 der Auflagerollen 58 schiebbar montiert. Die Betätigung der Betätigungsrollen 63 findet dabei statt mittels einer Schaltstange 67. In der in Fig. 5 abgebildeten Ruhestellung der Betätigungsrollen 63 werden die Vorsprünge 65 der Haken 62 beim Passieren der Auflagerollen 58 nicht länger angehoben, sodass die Haken 62 in der Arbeitsstellung stehen bleiben und gegen die vom Presskäfig 3 abgekehrten Seite des Flanschrandes 66 gedrückt werden. Sobald alle Stäbe 35, die nach Fig. 4 auf der rechten Seite des Presskäfigs 3 liegen, in dieser Weise von den Führungsrahmen 37 losgekuppelt sind, kann ein Rahmenteil 68 in die in Fig. 3 mit einer gestrichelten Linie angedeutete geöffnete Stellung geschwenkt werden. Der Rahmenteil 68 trägt einen Teil der Führung 50, sowie die Rollen 49 und die Auflagerollen 58. In der geöffneten Stellung des Rahmenteils 68 ist gleichfalls der Presskäfigs 3 geöffnet, sodass der gebildete Halmgutballen entfernt werden kann. Wenn der Halmgutballen entfernt ist, können die Betätigungsrollen 63 wieder in die Arbeitsstellung gebracht werden und kann der Rahmenteil 68 geschlossen werden, woraufhin ein weiterer Halmgutballen gebildet werden kann.

Es wird bemerkt, dass die Rollen 46-49 und die Auflage- und Abnahmerollen 58, 59 beim Ausführungsbeispiel nach Fig. 3 als Zahnräder ausgebildet sind.

Der Presskäfig 3 kann statt eines quadratischen Querschnittes zum Beispiel auch mit einem rechteckigen oder dreieckigen Querschnitt ausgebildet sein.

Die Erfindung beschränkt sich nicht auf die im vorstehenden beschriebenen Ausführungsbeispiele, sondern wird nur durch die Ansprüche bestimmt.

**Patentansprüche**

1. Vorrichtung zum Bilden eines gepressten Halmgutballen, mit einem auf einem Fahrgestell (2) unterstützten Presskäfig (3), der einen polygonalen Querschnitt aufweist und durch wenigstens ungefähr ebene, sich zwischen Endwänden erstreckende, steife Umfangswände (10 - 13; 34 - 36) begrenzt wird, und mit einem Aufsammler (5) zum Aufsammeln und Zuführen des Halmgutes zu einer stationären Einführungsöffnung (4) die im Umfang des Presskäfigs (3) angeordnet ist, wobei der Presskäfig (3) bewegbar gegenüber der Einführungsöffnung (4) ist, dadurch gekennzeichnet, dass die Umfangswände (10 - 13; 34 - 36) des Presskäfigs (3) durch in Umfangsrichtung in Abstand voneinander liegende, längliche Wandelementen (11; 35) bestimmt werden, die sich parallel zu der Längsachse (8) des Presskäfigs (3) zwischen den Endwänden erstrecken, daß der radiale Abstand zwischen den Wandelementen (11; 35) und der Längsachse (8) des Presskäfigs (3) variabel in Abhängigkeit von der Vergrößerung des sich bildenden Balles ist und durch wenigstens einen als Endwand drehbar um die Längsachse des Presskäfigs unterstützten polygonalen und entsprechend dem radialen Abständ der Wandelemente variablen Führungsrahmen (7; 37) für die Enden der Wandelemente bestimmt wird, welcher Führungsrahmen (7; 37) in einem festen, nahe der Einführungsöffnung (4) liegenden Antriebspunkt an seinem Umfang mit einer konstanten Geschwindigkeit für Rotation antreibbar ist.

2. Vorrichtung nach Anspruch 1, dadurch gekennzeichnet, dass zwei Führungsrahmen (37) angeordnet sind, die jeder eine Endwand des Presskäfigs bestimmen, und dass die Wandelemente Stäbe (35) sind, deren Enden mit zwei antreibbaren, endlosen Ketten (36) verbunden sind, die über ihre ganze Länge mit dergleichen, sich zwischen den Ketten erstreckenden, in gegenseitigen Zwischenabständen angeordneten Stäben (35) versehen sind, welche Ketten (36) mit den Stäben (35) in einem ersten Umfangspunkt mit den Führungsrahmen (37) kuppelbar sind und in einem zweiten Umfangspunkt der Führungsrahmen loskuppelbar sind, und die Ketten (36) mit den Stäben (35) zwischen diesen beiden Umfangspunkten einerseits über einen grossen Teil des Umfangs des Presskäfigs (3) auf den Führungsrahmen (37) geführt sind und anderseits entlang einer Rückbahn ausserhalb des Presskäfigs (3) geführt sind, wobei der zwischen den beiden Umfangspunkten liegende, von den Ketten mit den Stäben freie Umfangsteil des Presskäfigs die Einführungsöffnung (4) bildet.

3. Vorrichtung nach Anspruch 1, dadurch gekennzeichnet, dass die Wandelemente Rollen (11) sind, die mit einem Ende schiebbar in, in einer vertikalen Führungsplatte (13) gebildeten Schlitzen (12) geführt sind, die relativ zur zentralen Längsachse (8) des Presskäfigs (3) radial verlaufen, wobei zwischen zwei in der Nahe des Aufsammlers (5) liegenden Rollen die Einführungsöffnung (4) freigelassen ist.

4. Vorrichtung nach Anspruch 2 oder 3, dadurch gekennzeichnet, dass die Seiten des (jedes) Führungsrahmen (7; 37) je aus zwei ineinander schiebbaren länglichen Elementen (14, 15; 38, 39) bestehen, wobei die in den Ecken aneinander angrenzenden Elemente an Führungsbüchsen (26; 40) befestigt sind, die zwischen einer Anfangs- und einer Endstellung schiebbar auf radial verlaufenden Stäben (27; 41) montiert sind, die drehbar um die zentrale Längsachse (8) des Presskäfigs (3) angeordnet sind.

5. Vorrichtung nach Anspruch 2 oder 4, dadurch gekennzeichnet, dass in der Rückbahn der endlosen Ketten (36) Kettenspanner (47) aufgenommen sind.

6. Vorrichtung nach Anspruch 4 oder 5, dadurch gekennzeichnet, dass die Führungsbüchsen (40) auf beiden Seiten des Presskäfigs (3) mit einem Organ (54) gekuppelt sind, das über die Führungsbüchsen (40) einen Druck auf den im Presskäfig (3) zubildenden Halmgutballen ausüben kann.

7. Vorrichtung nach einem der Ansprüche 2 und 4 - 6, dadurch gekennzeichnet, dass in den beiden Umfangspunkten der Führungsrahmen (37) Auflage- bzw. Abnahmerollen (58 bzw. 59) für die endlosen Ketten (36) angeordnet sind, die durch Tragarme (60 bzw. 61) federnd unterstützt sind, und die Stäbe (35) gegen die Führungsrahmen (37) drücken bzw. von den Führungsrahmen (37) abnehmen.

8. Vorrichtung nach Anspruch 7, dadurch gekennzeichnet, dass jeder Stab (35) der endlosen Ketten (36) auf beiden Seiten mit einem drehbar montierten Haken (62) versehen ist, der mit einem Kuppelelement (66) des zugehörenden Führungsrahmens (37) zusammenarbeiten kann, wobei auf den Wellen (64) der Auflage- und Abnahmerollen (58, 59) Betätigungsrollen (63) angeordnet sind, welche die Haken (62) beim Passieren der Auflage- und Abnahmerollen (58, 59) in eine Freigabestellung bringen, während die Haken (62) nach dem Passieren der Betätigungsrollen (63) wieder in eine Arbeitsstellung zurückkehren, in welcher die Haken (62) der gegen die Führungsrahmen (37) gedrückten Stäbe (35) an das Kuppelelement (66) der Führungsrahmen (37) angreifen.

9. Vorrichtung nach Anspruch 8, dadurch gekennzeichnet, dass die auf der Welle (64) der Auflagerollen (58) montierten Betätigungsrollen (63) zwischen einer Arbeitsstellung und einer Ruhestellung verstellbar sind, wobei die Haken (62) nur in der Arbeitsstellung der Betätigungsrollen betätigt werden und in der Ruhestellung des Kuppelelementes (66) der Führungsrahmen (37) losgekuppelt bleiben, wobei die Rückbahn der endlosen Ketten (36) einen vor den Auflagerollen angeordneten Teil umfasst, der zusammen mit den Tragarmen (60) der Auflagerollen (58) in einem Rahmenteil (68) montiert ist, der aus einer Stellung, in welcher die Auflagerollen (58) die Stäbe (35) gegen die Führungsrahmen (37) drücken, bei wenigstens vom zu diesem Rahmenteil (68) zugekehrten Teil des Kuppelelementes (66) losgekuppelten Haken (62) in eine geöffnete Stellung schwenkbar ist, in welcher der gebildete Halmgutballen aus dem Presskäfig (3) abgeführt werden kann.

10. Vorrichtung nach einem der Ansprüche 4-9, dadurch gekennzeichnet, dass die Führungsrahmen (37) je mit vier in den Ecken am zugehörigen Führungsrahmen (37) befestigten Abschlussplatten (44, 45) versehen sind, die aneinander entlang schieben können und in jeder Stellung der Führungsbüchsen (40) den Presskäfig (3) in axialer Richtung abschliessen.

11. Vorrichtung nach Anspruch 3 und 4, dadurch gekennzeichnet, dass wenigstens eine (11''') der Rollen (11) durch einen Motor (29) antreibbar ist, welcher Motor (29) über Umkehrzahnräder (16) gleichfalls den Führungsrahmen (7) antreibt.

12. Vorrichtung nach Anspruch 11, dadurch gekennzeichnet, dass die länglichen Elemente aus ineinander schiebbaren rinnenförmigen Profilen (14, 15) bestehen, deren offene Seiten zur zentralen Längsachse (8) des Presskäfigs (3) zugekehrt sind, wobei der Antrieb des Führungsrahmens (7) über wenigstens ein in das rinnenförmige Profil (14, 15) des Führungsrahmens (7) angreifendes Antriebsrad (17) stattfindet, während die nicht angetriebenen Rollen (11) über entsprechende Räder (17) mit dem rinnenförmigen Profil (14, 15) des Führungsrahmens (7) zusammenwirken.

13. Vorrichtung nach Anspruch 11 oder 12, dadurch gekennzeichnet, dass an wenigstens eine der Führungsbüchsen (26) ein Druckorgan angreift, das einen Druck auf den zubildenden Halmgutballen ausüben kann.

14. Vorrichtung nach einem der Ansprüche 11 - 13, dadurch gekennzeichnet, dass der Presskäfig (3) am von der Führungsplatte (13) abgekehrten Ende durch eine wegschwenkbare Klappe (30) abgeschlossen ist, während am an der Führungsplatte (13) angrenzenden Ende eine Ausdruckplatte (32) liegt, die mittels eines teleskopischen Druckzylinders (31) in Richtung der Klappe (30) verstellbar ist.

15. Vorrichtung nach einem der Ansprüche 2 und 11 - 14, dadurch gekennzeichnet, dass die Enden jeder Rolle gelenkig mit den Enden (18, 19) von kreuzweise verlaufenden Tragstangen (20, 21) verbunden sind, deren andere Enden (22, 23) bzw. gelenkig im zugehörigen Schlitz (12) in der Führungsplatte (13) und in einer radial über dem von der Führungsplatte (13) abgekehrten Ende der zugehörigen Rolle (11) angeordneten Stütze (24) montiert sind, wobei die von der Führungsplatte (13) abgekehrten Enden (18, 23) der Tragstangen (20, 21) in Richtung der zentralen Längsachse (8) des Presskäfigs (3) schiebbar mit dem Ende der zugehörigen Rolle (11) bzw. mit der Stütze (24) verbunden sind.

**Claims**

1. A device for forming a bale of pressed straw or the like, comprising a pressure cage (3) mounted on a chassis (2) and having a polygonal cross-section and bounded by at least approximately flat, rigid peripheral walls (10 - 13, 34 - 36) extending between end walls, the device also comprising a pick-up means (5) for collecting and supplying the straw to a stationary insertion opening (4) disposed in the periphery of the pressure cage (3), the pressure cage (3) being movably mounted relative to the insertion opening (4), characterised in that the peripheral walls (10 - 13; 34 - 36) of the pressure cage (3) are defined by peripherally spacedapart long wall elements (11; 35) which extend parallel to the longitudinal axis (8) of the pressure cage (3) between the end walls, and that the radial distance between the wall elements (11; 35) and the longitudinal axis (8) of the pressure cage (3) is variable in dependence on the increase in size of the bale as it forms and is determined by at least one wall-element guide frame (7, 37) which serves as an end wall, is radially mounted around the longitudinal axis of the pressure cage, is polygonal and is variable depending on the radial distance between the wall elements, the guide frame (7; 37) being drivable at a constant speed in rotation at a fixed drive point on its periphery near the insertion opening (4).

2. A device according to claim 1, characterised in that two guide frames (37) are disposed and each bound an end wall of the pressure cage, and the wall elements are rods (35), the ends of which are connected to two drivable endless chains (36) provided along their entire length with similar rods (35) extending between the chains and spaced apart, the chains (36) and rods (35) being adapted to be coupled to the guide frame (37) at a first peripheral point and uncoupled from the guide frame at a second peripheral point, and the chains (36) and rods (35) between these two peripheral points are guided on the one hand on the frame (37) over a large part of the periphery of the pressure cage (2) and on the other hand are guided outside the pressure cage (3) along a return track, and the peripheral part of the pressure cage which lies between the two peripheral points and is free from chains and rods constitutes the insertion opening (4).

3. A device according to claim 1, characterised in that the wall elements are rollers (11) slidably guided at one end in slots (12) formed in a vertical guide plate, the rollers extending radially relative to the central longitudinal axis (8) of the pressure cage (3), and the insertion opening (4) being left uncovered between two rollers near the pick-up device (5).

4. A device according to claim 2 or 3, characterised in that the sides of the (each) guide frame (7; 37) each comprise two telescopable long elements (14, 15; 38, 39), and the elements adjacent one another in the corners are secured to guide sleeves (26, 40) mounted for sliding between an initial position and an end position on radial rods (27; 41) rotatably mounted around the central longitudinal axis (8) of the pressure cage (3).

5. A device according to claim 2 or 4, characterised in that chain adjusters (47) are disposed in the return path of the endless chains (36).

6. A device according to claim 4 or 5, characterised in that the guide sleeves (40) on both sides of the pressure cage (3) are coupled to a means (54) which, via the guide sleeves (40), can exert pressure on the bale of straw formed in the pressure cage (3).

7. A device according to any of claims 2 and 4 - 6, characterised in that bearing and removal rollers (58; 59) for the endless chains (36) are disposed at the two peripheral points of the guide frame (37) and are resiliently mounted on supporting arms (60; 61) and respectively press the rods (35) against the guide frame (37) and remove them from the guide frame (37).

8. A device according to claim 7, characterised in that each rod (35) on the endless chains (36) is provided on both sides with a rotatably mounted hook (62) which can cooperate with a coupling element (66) on the associated guide frame (37), and actuating rollers (63) are disposed on the shafts (64) of the bearing and removal rollers (58, 59) and move the hooks (62) into a release position on passing the bearing and removal rollers (58, 59) whereas after passing the actuating rollers (63) the hooks (62) return to an operating position in which the hooks (62) on the rods (35) pressed against the guide frame (37) engage the coupling element (66) on the guide frame (37).

9. A device according to claim 8, characterised in that the actuating rollers (63) mounted on the shaft (64) of the bearing rollers (58) are adjustable between an operating position and an inoperative position, the hooks (62) are actuated only in the operating position of the actuating rollers whereas they remain uncoupled in the inoperative position of the coupling element (66) of the guide frames (37), and the return track of the endless chains (36) comprises a part disposed in front of the bearing rollers and mounted together with the supporting arms (60) of the bearing rollers (58) in a frame part (68) which is pivotable from a position in which the bearing rollers (58) press the rods (35) against the guide frames (37), when the hooks (62) are uncoupled at least from the part of the coupling element (62) facing the frame part (68), into an opened position in which the bale of hay can be removed from the pressure cage (3) after being formed.

10. A device according to any of claims 4 to 9, characterised in that the guide frames (37) are each provided with four closure plates secured to the corners of the associated guide frame (37), the plates being slidable along one another and closing the pressure cage (3) in the axial direction in every position of the guide sleeves (40).

11. A device according to claims 3 and 4, characterised in that at least one (11''') of the rollers (11) is drivable by a motor (29) which likewise drives the guide frame (7) via reversing gearwheels (16).

12. A device according to claim 11, characterised in that the long elements are made up of telescopable trough-shaped section members (14, 15) whose open sides face the central longitudinal axis (8) of the pressure cage (3), the guide frame (7) being driven via at least one drive wheel (17) engaging the trough-like cross-section (14, 15) of the guide frame (7) whereas the non-driven rollers (11) cooperate with the trough-like section-member (14, 15) via corresponding wheels (17).

13. A device according to claim 11 or 12, characterised in that a pressure means engages at least one of the guide sleeves (26) and can exert pressure on the bale of straw as it forms.

14. A device according to any of claims 11 - 13, characterised in that the pressure cage (3) is closed by a pivotable flap (30) at the end remote from the guide plate (13), whereas an ejection plate (32) is disposed at the end adjacent the guide plate (13) and is adjustable in the direction of the flap (30) by a telescopic pressure cylinder (31).

15. A device according to any of claims 2 and 11 - 14, characterised in that the ends of each roller are pivotably connected to the ends (18, 19) of crosswise extending supporting rods (20, 21), the other ends (22, 23) of which are pivotably mounted respectively in the associated slot (12) in the guide plate (13) and in a support (24) disposed radially over the end of the associated roller (11) remote from the guide plate (13), the ends (18, 23) of the supporting rods (20, 21) remote from the guide plate (13) being slidably connected to the end of the associated roller (11) or to the support (24) in the direction of the central longitudinal axis (8) of the pressure cage (3).

**Revendications**

1. Dispositif pour mettre de la paille en balles pressées, comportant sur un chariot support (2)

7

une cage de presse (3) qui présente une section transversale polygonale et est limitée au minimum par des parois périphériques (10 - 13; 34 - 36) rigides, sensiblement planes, s'étendant entre les parois d'extrémité, dispositif comportant un ramasseur (5) chargé du ramassage et de l'amenage de la paille à une ouverture d'entrée (4) fixe placée sur la périphérie de la cage de presse (3), cette dernière étant mobile vis-à-vis de l'ouverture d'entrée (4), caractérisé en ce que les parois périphériques (10 - 13; 34 - 36) de la cage de presse (3) sont déterminées par des éléments de paroi (11; 35) oblongs, situés en direction périphérique à distance les uns des autres et qui s'étendent entre les parois d'extrémité, parallèlement à l'axe longitudinal (8) de la cage de presse (3), en ce que la distance radiale entre les éléments de paroi (11; 35) et l'axe longitudinal (8) de la cage de presse (3) est variable en fonction de la taille de la balle en formation et est déterminée en ce qui concerne les extrémités des éléments de paroi par au minimum un cadre de guidage (7; 37) comme paroi d'extrémité, étayé, tournant autour de l'axe longitudinal de la cage de presse, polygonal et variable en conformité avec la distance radiale des éléments de paroi, ce cadre de guidage (7; 37) étant, en un point de commande fixe, proche de l'ouverture d'entrée (4), actionnable en rotation avec une vitesse constante à sa périphérie.

2. Dispositif selon la revendication 1, caractérisé en ce que deux cadres de guidage (37), déterminant chacun une paroi d'extrémité de la cage de presse, sont aménagés et que les éléments de paroi sont des barres (35), dont les extrémités sont reliées à deux chaînes sans fin (36) actionnables qui sont munies sur toute leur longueur de barres semblables (35) s'étendant entre les chaînes, disposées à des distances intermédiaires réciproques, lesquelles chaînes (36), avec les barres (35) connectables en un premier point de la périphérie avec le cadre de guidage (37) et déconnectables de celui-ci en un deuxième point, sont guidées entre ces deux points de la périphérie d'une part au-dessus d'une grande partie de la périphérie de la cage de presse (3) sur le cadre de guidage (37) et d'autre part le long d'une glissière à l'extérieur de la cage de presse (3), la partie périphérique de la cage de presse située entre les deux points de la périphérie, exempte de chaînes avec les barres, formant l'ouverture d'entrée (4).

3. Dispositif selon la revendication 1, caractérisé en ce que les éléments de paroi sont des rouleaux (11), qui sont guidés avec une extrémité coulissant dans des fentes (12) d'une plaque verticale de guidage (13), fentes qui partent radialement par rapport à l'axe longitudinal central (8) de la cage de presse (3), l'ouverture d'entrée (4) étant laissée libre entre deux rouleaux situés au voisinage du ramasseur (5).

4. Dispositif selon la revendication 2 ou 3, caractérisé en ce que les côtés du (de chaque) cadre de guidage (7; 37) sont respectivement constitués de deux éléments coulissant longitudinalement l'un dans l'autre (14, 15; 38, 39), cependant que les éléments contigus dans les angles sont fixé à des boîtes de guidage (26; 40), lesquelles coulissent entre une position initiale et une position terminale sur des barres (27; 41) situées radialement qui tournent autour de l'axe longitudinal central (8) de la cage de presse (3).

5. Dispositif selon la revendication 2 ou 4, caractérisé en ce que des tendeurs de chaîne (47) sont introduits dans la glissière des chaînes sans fin (36).

6. Dispositif selon la revendication 4 ou 5, caractérisé en ce que les boîtes de guidage (40) sont des déux côtés de la cage de presse (3) couplées avec un organe (54) qui peut, par l'intermédiaire des boîtes de guidage (40), exercer une pression sur les balles de paille en formation dans la cage de presse (3).

7. Dispositif selon l'une des revendications 2 et 4 - 6, caractérisé en ce qu'aux deux points de la périphérie du cadre de guidage (37) sont placés, pour appuyer et dégager les chaînes sans fin (36), des rouleaux (58 et 59) soutenus par des bras porteurs à ressort (60 et 61) et appuyant les barres (35) contre le cadre de guidage (37) ou les dégageant de celui-ci.

8. Dispositif selon la revendication 7, caractérisé en ce que chaque barre (35) des chaînes sans fin (36) est munie des deux côtés d'un bec (62) pivotant qui peut coopérer avec un élément de couplage (66) du cadre de guidage (37) correspondant, cependant que sont placés sur les axes (64) des rouleaux d'appui et de dégagement (58, 59) des rouleaux de commande (63) qui mettent les becs (62) en position de déverrouillage lors du passage des rouleaux d'appui et de dégagement (58, 59), tandis qu'après le passage des rouleaux de commande (63) les becs (62) reviennent en position de travail, dans laquelle les becs (62) des barres (35) pressées contre le cadre de guidage (37) agrippent l'élément de couplage (66) du cadre de guidage (37).

9. Dispositif selon la revendication 8, caractérisé en ce que les rouleaux de commande (63) montés sur l'axe (64) des rouleaux d'appui (58) peuvent se déplacer entre une position de travail et une position de repos, les becs (62) n'étant actionnés qu'en position de travail des rouleaux de commande et demeurant déconnectés en position de repos de l'élément de couplage (66) du cadre de guidage (37), une partie de la glissière des chaînes sans fin (36) se trouvant située avant les rouleaux d'appui est montée ainsi que les bras porteurs (60) des rouleaux d'appui (58) dans une partie du cadre (68), qui peut pivoter d'une, position dans laquelle les rouleaux d'appui (58) pressent les barres (35) contre le cadre de guidage (37), les becs (62) étant au minimum dégagés par la partie de l'élément de couplage (66) tournée vers cette partie du cadre (68), vers une position ouverte

dans laquelle la balle de paille formée peut être acheminée en dehors de la cage de presse (3).

10. Dispositif selon l'une des revendications 4 - 9, caractérisé en ce que les cadres de guidage (37) sont respectivement équipés, dans les angles, de quatre plaques d'obturation (44, 45) fixées au cadre de guidage (37) correspondant et qui peuvent coulisser l'une contre l'autre et obturer pour chaque position des boîtes de guidage (40) la cage de presse (3) en direction axiale.

11. Dispositif selon les revendications 3 et 4, caractérisé en ce qu'au moins l'un (11''') des rouleaux (11) est actionné par un moteur (29), lequel actionne de la même manière le cadre de guidage (7) par des engrenages de renvoi (16).

12. Dispositif selon la revendication 11, caractérisé en ce que les éléments oblongs ont des profils (14, 15) en forme de gouttière coulissant les uns dans les autres, profils dont les côtés ouverts sont tournés vers l'axe longitudinal central (8) de la cage de presse (3), l'entraînement du cadre de guidage (7) ayant lieu par, au minimum, une roue d'entraînement (17) en prise dans le profil (14, 15) en forme de gouttière du cadre de guidage (7), pendant que les rouleaux (11) non entraînés par les roues (17) correspondantes coopèrent avec le profil (14, 15) en forme de gouttière du cadre de guidage (7).

13. Dispositif selon la revendication 11 ou 12, caractérisé en ce qu'un organe de pression, pouvant exercer une pression sur la balle de paille en formation, est en prise sur au minimum l'une des boîtes de guidage (26).

14. Dispositif selon l'une des revendications 11 - 13, caractérisé en ce que la cage de presse (3) est fermée à son extrémité opposée à la plaque de guidage (13) par une trappe (30) pouvant s'enlever par pivotement, tandis qu'à l'extrémité voisine de la plage de guidage se trouve une plaque de pression (32) déplaçable sous l'effet d'un cylindre de pression télescopique (31) en direction de la trappe (30).

15. Dispositif selon l'une des revendications 2 et 11 - 14, caractérisé en ce que les extrémités de chaque rouleau sont reliées de manière articulée avec les extrémités (18, 19) de barres supports (20, 21) entrecroisées, dont les autres extrémités (22, 23) sont respectivement montées, de manière articulée, dans la fente (12) correspondante de la plaque de guidage (13) et dans un montant (24) placé radialement au-dessus de l'extrémité opposée à la plaque de guidage (13) du rouleau (11) correspondant, cependant que les extrémités (18, 23) opposées à la plaque de guidage (13) des barres supports (20, 21) sont respectivement reliées, en direction de l'axe longitudinal central (8) de la cage de presse (3) et de manière coulissante, à l'extrémité du rouleau (11) correspondant et au montant (24).

fig.1

fig.2

fig.3

0 117 377

fig.4

fig.5